# EUROPEAN PATENT APPLICATION

(11) **EP 4 503 520 A1**
(43) Date of publication of application: **05.02.2025**
(21) Application number: 23799662.4
(22) Date of filing: 03.05.2023
(51) Int. Cl.: H04L 12/14, H04W 8/02, H04W 4/24

(54) **ROAMING TERMINAL EDGE COMPUTING SERVICE CHARGING SUPPORTING METHOD**

(30) Priority: 03.05.2022 KR 20220055005
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2023/006002
(87) International publication number: WO 2023/214781

(57) **Abstract**

The present disclosure provides a method performed by a first entity which performs a session management function for an HPLMN in a wireless communication system. The method comprises the steps of: confirming that session breakout is allowed for home routed PDU sessions for roaming; obtaining, from a second entity performing a charging function for the HPLMN, charging information to be applied to a first session, from among the home routed PDU sessions, broken out within a VPLMN for an edge computing service; and transmitting a message including the charging information to a third entity which performs a session management function for the VPLMN.

## Description

### [Technical Field]

The disclosure relates to a wireless communication system and, more particularly, to a charging support method for a roaming UE using an edge computing service in a wireless communication system

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for largecapacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

To apply an edge computing service to a roaming UE, a session needs to be connected to a local data network where an edge computing server of a visited network is installed through a shortened transmission path. Here, a different policy from a charging policy applied to general roaming data traffic needs to be applied to charging for data traffic exchanged between the local data network and the roaming UE. However, a method for obtaining charging information applied to an edge computing session in the visited network and a method for applying edge computing session charging control are not defined.

The disclosure provides a method for applying a charging policy to an edge computing session of a roaming UE.

Specifically, the disclosure proposes a method for configuring a charging policy for a broken-out session and providing related usage monitoring information to a charging function (CHF) when a roaming UE uses an edge computing service through the session breakout of a home routed (HR) session.

In addition, the disclosure proposes a procedure in which a session management function (SMF) of a visited network obtains charging information or policies related to an edge computing service session and a procedure in which a CHF of a visited network or a home network generates and transmits charging information.

### [Technical Solution]

A method performed by a first entity that performs a session management function of a home public land mobile network (HPLMN) in a wireless communication system according to an embodiment of the disclosure may include identifying that session breakout of a home routed protocol data unit (PDU) session for roaming is allowed, obtaining charging information to be applied to a first session broken out in a visited public land mobile network (VPLMN) for an edge computing service among the home-routed PDU session from a second entity that performs a charging function of the HPLMN, and transmitting a message including the charging information to a third entity that performs a session management function of the VPLMN.

A method performed by a first entity that performs a session management function of a VPLMN in a wireless communication system according to another embodiment of the disclosure may include receiving a message including charging information from a second entity that performs a session management function of an HPLMN, and transmitting the charging information to a third entity that performs a charging function of the VPLMN, wherein the charging information is applied to a first session broken out in the VPLMN for an edge computing service among a home routed PDU session in case that session breakout of the home-routed PDU session for roaming is allowed.

A first entity that performs a session management function of an HPLMN in a wireless communication system according to still another embodiment of the disclosure may include a transceiver and a controller connected to the transceiver, wherein the controller may be configured to identify that session breakout of a home routed PDU session for roaming is allowed, obtain charging information to be applied to a first session broken out in a visited public land mobile network (VPLMN) for an edge computing service among the home-routed PDU session from a second entity that performs a charging function of the HPLMN, and transmit a message including the charging information to a third entity that performs a session management function of the VPLMN.

A first entity that performs a session management function of a VPLMN in a wireless communication system according to yet another embodiment of the disclosure may include a transceiver, and a controller connected to the transceiver, wherein the controller may configured to receive a message including charging information from a second entity that performs a session management function of an HPLMN, and transmit the charging information to a third entity that performs a charging function of the VPLMN, and the charging information is applied to a first session broken out in the VPLMN for an edge computing service among a home routed PDU session in case that session breakout of the home-routed PDU session for roaming is allowed.

The technical subjects pursued in various embodiments of the disclosure may not be limited to the above-mentioned technical subjects, and other technical subjects which are not mentioned may be clearly understood from the following descriptions by those skilled in the art to which the disclosure pertains.

### [Advantageous Effects]

According to an embodiment of the disclosure, when providing an edge computing service for a roaming UE, necessary charging information and control policies may be configured in a visited network.

Further, according to an embodiment of the disclosure, usage adjustment of an edge computing service for a roaming UE may be applied according to charging information.

Advantageous effects obtainable from the disclosure may not be limited to the above-mentioned effects, and other effects which are not mentioned may be clearly understood from the following descriptions by those skilled in the art to which the disclosure pertains.

### [Description of Drawings]

FIG. 1 illustrates an example of a scenario in which edge computing is nonhierarchically configured according to an embodiment of the disclosure;
FIG. 2 illustrates an example of configuring a user plane path for supporting an edge computing service of a roaming UE according to an embodiment of the disclosure;
FIG. 3A illustrates an example of signaling flow for a visited SMF (V-SMF) to obtain edge computing session charging information about a roaming UE according to an embodiment of the disclosure ;
FIG. 3B illustrates an example of signaling flow for a V-SMF to obtain edge computing session charging information about a roaming UE according to an embodiment of the disclosure;
FIG. 4 illustrates an example of a procedure for performing charging-related reporting according to an embodiment of the disclosure;
FIG. 5A illustrates an example of a procedure for applying a charging policy and performing charging-related reporting according to a policy of an HPLMN according to an embodiment of the disclosure;
FIG. 5B illustrates an example of a procedure for applying a charging policy and performing charging-related reporting according to a policy of an HPLMN according to an embodiment of the disclosure;
FIG. 6 is a block diagram illustrating the internal structure of a UE according to an embodiment of the disclosure; and
FIG. 7 illustrates the structure of a network entity that performs a network function according to an embodiment of the disclosure.

### [Mode for Invention]

Hereinafter, the operation principle of the disclosure will be described in detail with reference to the accompanying drawings.

The terms which will be described below are terms defined in consideration of the functions in the disclosure. Theses terms may be different according to users, intentions of the users, or customs, and their definitions should be made based on the contents throughout the specification.

In the disclosure, terms referring to network entities and entities of edge computing systems, terms referring to messages, terms referring to identification information, and the like are illustratively used for the descriptive convenience. Therefore, the disclosure is not limited by the terms as described below, and other terms referring to subjects having equivalent technical meanings may also be used.

In the following description, the disclosure will be described using terms and names defined in the 5G system standards for the descriptive convenience, but the disclosure is not limited by these terms and names and may be applied in the same way to systems that conform other standards.

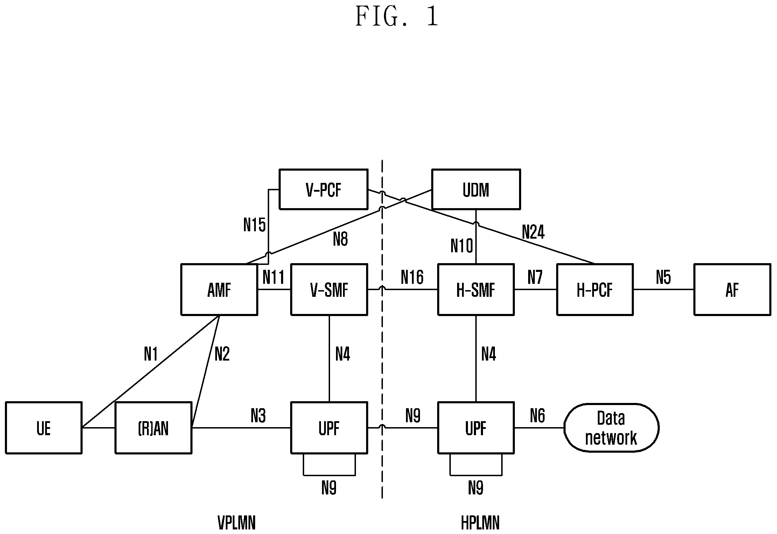

FIG. 1 illustrates an example of a scenario in which edge computing is nonhierarchically configured according to an embodiment of the disclosure.

The architecture of a 5G system supporting home-routed (HR) roaming may include various network functions (NFs). Referring to FIG. 1, the 5G system supporting HR roaming may include an access and mobility management function (AMF), a session management function (SMF), a policy control function (PCF), an application function (AF), a unified data management (UDM), a data network (DN), a user plane function (UPF), a (radio) access network ((R)AN), and a user equipment (UE).

Each NF may support the following functions.
- The AMF provides a function of managing access and mobility for each UE, and one UE may basically be connected to one AMF. A visited-AMF (V-AMF) refers to an AMF of a network visited by a UE subscriber. A home-AMF (H-AMF) refers to an AMF of a home network of a UE subscriber.
- The DN may refer to, for example, an operator service, Internet access, or a third-party service. The DN may transmit a downlink protocol data unit (PDU) to the UPF, or may receive a PDU transmitted from the UE from the UPF.
- The PCF may provide a function of determining a policy on mobility management and session management by receiving information about packet flow from the application server. Specifically, the PCF may support functions of supporting a unified policy framework to control a network operation, providing a policy rule so that a control plane function(s) (e.g., the AMF and the SMF) may implement the policy rule, and implementing a front end to access related subscription information for policy determination in a user data repository (UDR).
- The SMF provides a session management function, and when a UE has a plurality of sessions, each session may be managed by a different SMF. A visited-SMF (V-SMF) refers to an SMF of a network visited by a UE subscriber. A home-SMF (H-SMF) refers to an SMF of a home network of the UE subscriber.
- The UDM may store user subscription data, policy data, and the like.
- The UPF may forward a downlink PDU received from the DN to the UE via the (R)AN, and may forward an uplink PDU received from the UE to the DN via the (R)AN.
- The AF may interoperate with a 3GPP core network to provide a service (e.g., to support functions of application impact on traffic routing, access to network capability exposure, and interaction with a policy framework for policy control).
- A charging function (CHF) may provide charging information for a mobile communication network (e.g., a service to be charged for, a charging type, and whether to apply a restriction on use of other services to usage) to the SMF.
- An edge application server discovery function (EASDF) may process a domain name system (DNS) query transmitted by the UE according to a rule provided from the SMF. For example, the EASDF may perform operations of forwarding the DNS query transmitted by the UE to a DNS server, receiving a DNS response, transmitting a related report to the SMF, and providing the DNS response to the UE.

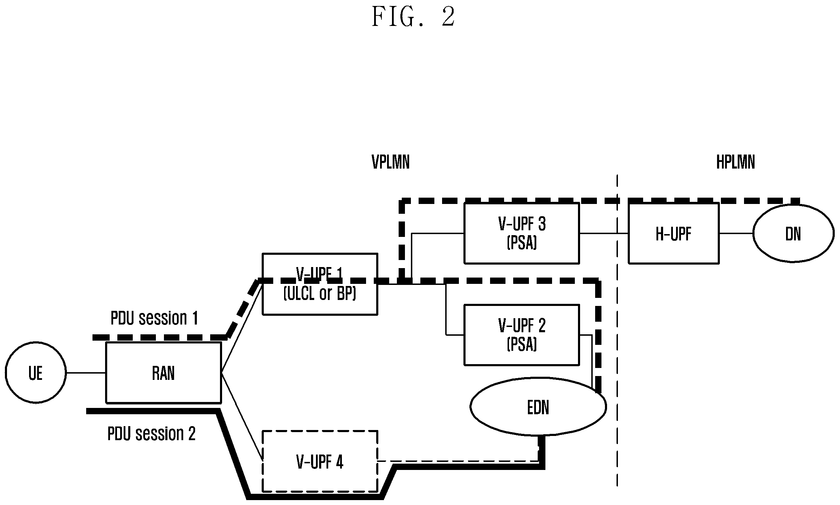

FIG. 2 illustrates an example of configuring a user plane path for supporting an edge computing service of a roaming UE according to an embodiment of the disclosure.

Referring to FIG. 2, there may be a method of supporting local access toward an edge data network (EDN) by breaking an HR roaming PDU session of a roaming UE like the path of PDU session 1. Further, there may be a method in which a roaming UE supports local access toward an edge data network by generating a separate PDU session for a local breakout session like the path of PDU session 2. In PDU session 1 of FIG. 2, the usage of traffic transmitted through V-UPF2 may be calculated as edge computing service usage. Therefore, when a charging policy on the edge computing service for the roaming UE needs to be separately applied, it is necessary to separately monitor the usage of traffic transmitted through the path of V-UPF2 and the usage of traffic transmitted through the path of V-UPF4.

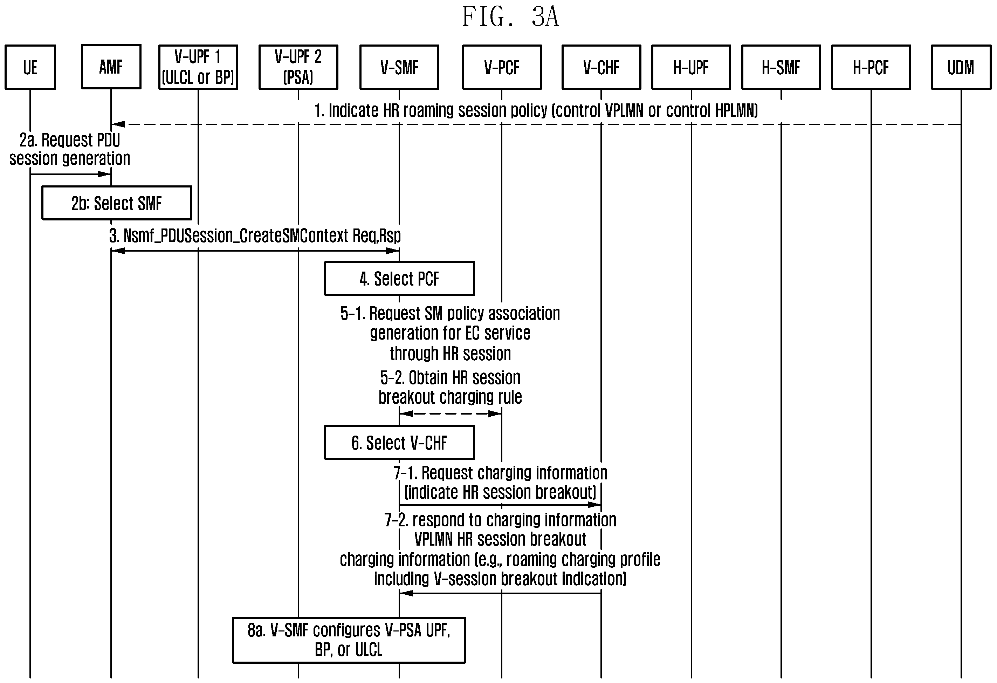

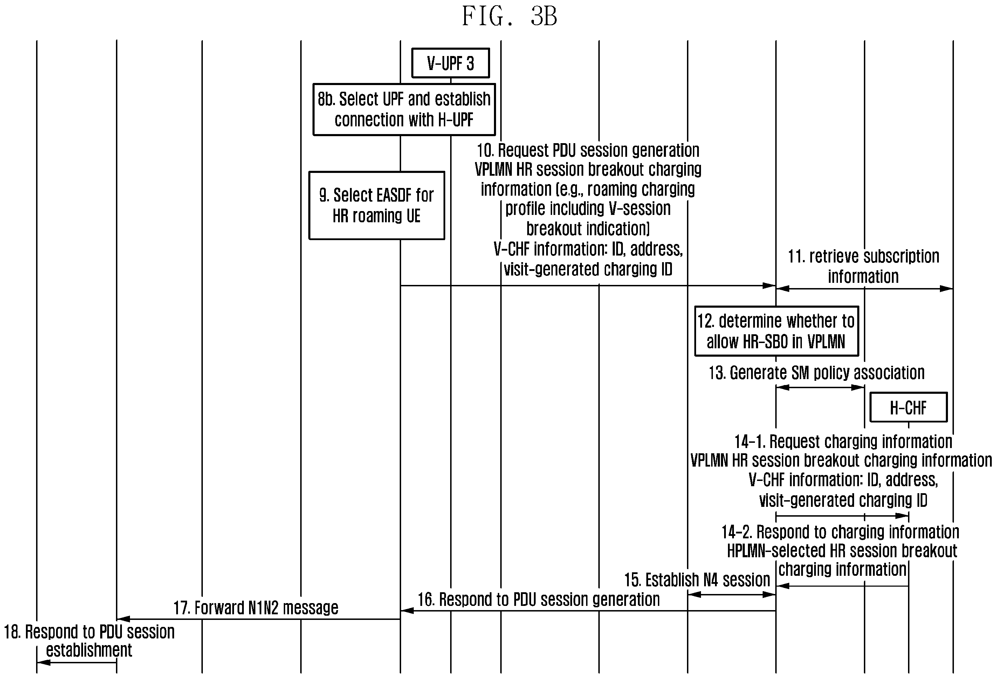

FIG. 3A and FIG. 3B illustrate an example of signaling flow for a V-SMF to obtain edge computing session charging information about a roaming UE according to an embodiment of the disclosure.

Operation 1: An AMF may obtain edge computing roaming service support information from a UDM. The edge computing roaming service support information may include at least one of the following information (e.g., information (1) to (4)):
(1) Whether an edge computing service is supported for a roaming UE;
(2) Session management method information for supporting the edge computing service;
   For example, whether generation of a separate local breakout session (LBO) for the edge computing service is supported or whether session breakout for an HR roaming session is supported may be indicated/configured by information (2). In the disclosure, an HR roaming session may refer to an HR PDU session for/associated with roaming.
(3) Charging control configuration information about the breakout of the HR roaming session (e.g., a charging control configuration indicator for the HR roaming session and information indicating that charging information about the edge computing service for the roaming UE is obtained from a V-CHF) when information (2) indicates that the session breakout of the HR roaming session is supported; and/or
   For example, the charging control configuration information about the breakout of the HR roaming session may include an indicator indicating information about whether a visited public land mobile network (VPLMN) may autonomously determine a charging policy (VPLMN charging policy determination) or whether a policy determined by a home public land mobile network (HPLMN) needs to be followed (HPLMN charging policy determination).
(4) Information about a slice or a data network name (DNN) for an edge computingdedicated LBO session and a related charging information indicator when information (2) indicates that the generation of the separate LBO for the edge computing service is supported for the roaming UE.

For example, (2) the session management method information for the edge computing service support may indicate that the generation of the separate LBO for the edge computing service is supported and the breakout of the HR roaming session is also supported. In this case, both a separate LBO session generation method and an HR roaming session breakout method may be applied as an edge computing service session method for the roaming UE (e.g., each of the LBO session generation method or the HR roaming session breakout method may be applied depending on an application service used by the roaming UE).

Although the foregoing embodiment mainly illustrates a procedure for the UE supporting only the HR roaming session breakout method, the disclosure is not limited thereto, and content described in the foregoing embodiment may also be applied to a UE supporting LBO generation.

Operation 2a/2b: The AMF may receive a PDU session establishment request message from the UE (operation 2a), and may select an SMF (operation 2b). The AMF may select an SMF capable of supporting an edge computing service session. For example, when only the breakout of the HR roaming session is supported in operation 1, the AMF may select an SMF capable of performing HR roaming session breakout when selecting an SMF.

Operation 3: The AMF may transmit a PDUSession_CreateSMContext request message to a V-SMF, and may receive a response thereto from the V-SMF. The AMF may provide the information obtained through operation 1 to the V-SMF.

Operation 4: The V-SMF may select a V-PCF, based on the edge computing service support information about the roaming UE obtained from the AMF in operation 3. When selecting the V-PCF, the V-SMF may select a PCF (involved in session management and charging) capable of providing a session breakout policy and session breakout-related charging information about an HR roaming session. For example, the V-SMF may select a V-PCF capable of providing a session management policy, and may obtain an edge computing service session management policy from the selected V-PCF. For example, when the edge computing service for the roaming UE is configured to be performed through an LBO session rather than HR roaming session breakout in the previous operation, the V-SMF may select a V-PCF involved in a UE policy and also capable of providing a session management policy.

Operation 5-1: The V-SMF may transmit an SM policy association establishment request message to the V-PCF selected in operation 4. The message may include HR roaming session management policy configuration information (e.g., an HR roaming session policy configuration indicator (e.g., an indicator indicating VPLMN control policy determination or HPLMN control policy determination), an indication to request an HR session breakout policy, or an indicator indicating that the session is related to the edge computing service). The message may be used to indicate that the edge computing service is supported through the breakout of the HR session and to receive a related session management policy and charging-related information.

Operation 5-2: The V-PCF may transmit a response message to the SM policy association establishment request to the V-SMF. Specifically, the V-PCF may recognize that a related policy is required for the breakout of the HR roaming session through the HR roaming session management policy configuration information received from the V-SMF, and may provide a related HR roaming session breakout policy and HR roaming session breakout charging information to the V-SMF. For example, detection and reporting request information about the start and stop of the HR roaming session breakout may be included in an HR roaming session breakout policy or HR roaming session charging information and transmitted to the V-SMF as a response message corresponding to operation 5-1. In addition, the detection and reporting request information about the start and stop of the HR roaming session breakout may be provided for each user application. In this case, traffic description information (e.g., 5-tuple information including an IP address/port number, DNN/single-network slice selection assistance information (S-NSSAI) information, or an application identifier) for identifying corresponding application traffic may also be provided. The V-PCF may provide information about the V-CHF that manages charging for the HR roaming session breakout to the V-SMF. For example, the information about the V-CHF may be locally configured in the V-PCF, obtained from a visited-network repository function (V-NRF), or obtained from V-CHF information included in PDU session policy control subscription information stored in a UDR. When the V-PCF obtains the information about the V-CHF and provides the information to the V-SMF, the V-PCF may find the V-CHF capable of providing charging information about the HR roaming session and providing edge computing-related charging information, and may provide the V-CHF to the V-SMF.

To support V-CHF discovery/selection, the V-CHF may register with the V-NRF whether to support providing charging information about the HR roaming session or whether to provide charging information related to the edge computing service along with an address and identifier information about the V-CHF. This registration procedure may be performed in advance.

In addition, the V-PCF may provide charging-related rule information about the roaming UE to the V-SMF. The charging-related rule information provided by the V-PCF to the V-SMF may include at least one of the following:
- Rule ID;
- Precedence;

When edge computing service charging for the roaming UE is preferentially applied, a precedence value may be configured so that a charging policy applied when the same application service is used through edge computing service is preferentially executed.
- Service data flow detection;

Service data flow detection information may include information for detecting edge computing service traffic, specifically, information for detecting/identifying a packet belonging to service data flow transmitted through a session broken out from the HR roaming session. For example, data network access identifier information about an edge data network through which the session broken out from the HR roaming session within a VPLMN is transmitted, such as a service data flow template, may be provided together. Through the data network access identifier information, the broken-out session and a session transmitted to the UPF of the HPLMN among the service data flow transmitted through the HR roaming session may be distinguished. Alternatively, CN tunnel information (e.g., address information about a CN tunnel connected to the UPF of the HPLMN or address information about the HPLMN UPF seen from a VPLMN UPF) may be included.
- Indicator applied to the session broken out from the HR roaming session;

The indicator may refer to information indicating that a provided rule needs to be applied only to the session broken out from the HR roaming session.
- Whether to mute a notification related to the start and end of the session breakout of the HR session (e.g., for the edge computing service for HR roaming UEs);
- Charging key;
- Service identifier;
- Edge computing service-dedicated charging application indicator;

The indicator may indicate whether a separate charging method is applied to the session for the edge computing service.
- Edge computing service provider identifier, application service provider identifier;
- Charging method;

The charging method may indicate online or offline charging or non-charging (when edge computing service-dedicated charging is applied, charging method information about the session for the edge computing service may be additionally included).
- Whether to perform blocking when an online charging method is applied (whether to perform quota management according to usage or use time); or

This information may include information about whether to perform blocking only on the session broken out from the HR roaming session, whether to perform blocking only on the session transmitted to the UPF of the HPLMN through the HR roaming session, or whether to apply blocking to both sessions.
- HR roaming session breakout-dedicated measurement method;

The measurement method may refer to information indicating monitoring and measurement of the data usage, time, a combination of usage and time, or specific event of the service data flow of the session broken out from the HR roaming session.

Operation 6: The V-SMF may select the V-CHF, based on the information about the V-CHF provided from the V-PCF. When the V-PCF does not provide the information about the V-CHF, the V-SMF may obtain the information about the V-CHF. The V-SMF may select the V-CHF by using the information about the V-CHF locally configured or the information about the V-CHF obtained from the V-NRF. When obtaining the information about the V-CHF, the V-SMF may be provided with the charging information about the HR roaming session, and may find the V-CHF capable of providing the edge computing-related charging information.

For reference, to support V-CHF discovery/selection, the V-CHF may register with the V-NRF whether to support providing the charging information about the HR roaming session or whether to provide the charging information related to the edge computing service along with an address and identifier information about the V-CHF. This registration procedure may be performed in advance.

Operation 7-1: The V-SMF may transmit a message for requesting charging information to the V-CHF. The message may include at least one piece of information of an HR roaming session breakout indicator, an edge computing service charging request indicator, or an edge computing roaming service charging request indicator. Further, the message may include an identifier of the roaming UE to be served and information about an application as an edge computing service target (e.g., an application identifier, an application service provider identifier, an edge computing service provider identifier, or DNN/S-NSSAI information).

Operation 7-2: The V-CHF may provide the charging information to the V-SMF, based on the information received from the V-SMF in operation 7-1. The charging information may be provided in the form of a roaming charging profile, and may include at least one of the following elements:
- Charging application method type;
   ■ Type 1 of uniform application to HR roaming session: The same charging policy or method is applied to traffic transmitted to the UPF of the HPLMN in the HR roaming session and traffic forwarded to the V-UPF through the HR roaming session breakout and transmitted to the edge data network (data network in which the edge computing service provided by a VPLMN operator is hosted) connected to the VPLMN.
   ■ Type 2 of applying differential edge computing service charging through the HR roaming session breakout: Different charging policies or methods are applied to the traffic transmitted to the UPF of the HPLMN in the HR roaming session and the session broken out from the HR roaming session (traffic session transmitted to the edge data network of the VPLMN through the V-UPF).
- Charging type; or
   ■ The charging type may be either online charging or offline charging.
   ■ When the charging application method is type 2, charging type information about each of the session transmitted to the UPF of the HPLMN in the HR roaming session and the session broken out from the HR roaming session may be included.
- Charging model;
   ■ The charging model may be one of data volume-based, usage time-based, usage and time-based, event-based, and non-charging models.
   ■ When the charging application method is type 2, charging model information about each of the session transmitted to the UPF of the HPLMN in the HR roaming session and the session broken out from the HR roaming session may be included.

Operations 8a/8b: The V-SMF may configure a user plane path, based on the information received from the V-PCF and the V-CHF. Based on an indicator indicating performance of the session breakout of the HR roaming session within the VPLMN from the V-PCF, the V-SMF may configure an UPF (e.g., V-UPF1 of FIG. 3A) serving as an uplink classifier (ULCL) or a branch point (BP), and may set up and configure a PDU session anchor (PSA) UPF (e.g., V-UPF2 of FIG. 3A) for local access to a local data network (data network that needs to be connected to use the edge computing services) of the VPLMN. The V-SMF may configure a rule for applying the session breakout policy received from the V-PCF (e.g., a usage threshold, a time threshold, a monitoring period, whether to perform notification when usage or use time is close to the threshold, or whether to perform blocking when the usage or time threshold configured in the policy is exceeded with respect to the session broken out from the HR roaming session to the local data network of the VPLMN) in the UPF serving as the ULCL or the BP and the PSA UPF that forwards the broken-out session to the local data network through an N4 interface. In addition, the foregoing information may be configured for the V-UPF (e.g., V-UPF3) directly connected to an H-UPF.

Operation 9: The V-SMF may select an edge application server discovery function (EASDF) for the edge computing service of the HR roaming UE.

Operation 10: The V-SMF may transmit a PDU session establishment request message to an H-SMF. The V-SMF may provide the H-SMF with the charging-related information applied for the session breakout of the HR roaming session. The information may include the information (e.g., identifier and address) about the V-CHF, a charging identifier (charging identifier generated by the VPLMN), a charging policy or roaming charging profile information (charging policy or profile information according to the session breakout of the HR session; all or part of the information obtained by the V-SMF from the V-PCF and V-CHF in operation 5-2 and operation 7-2 may be included), or a session management policy applied to the session breakout and V-PCF information. These pieces of information may be provided to the H-SMF in the form of a session management policy configuration report related to the breakout of the HR roaming session.

Operation 11: The H-SMF may identify subscription information and roaming-related policy information about the HR roaming UE stored in the UDM, based on the information received from the V-SMF. Accordingly, the H-SMF may identify whether the edge computing service is allowed for the roaming UE, whether the HR session may be broken out for the roaming UE in the VPLMN, and the like.

Operation 12: The H-SMF may determine/decide whether the breakout of the HR session is allowed in the VPLMN, based on the subscription information and the roaming-related policy information about the UE identified in operation 11.

Operation 13: The H-SMF may select an H-PCF capable of providing a policy for the HR session. The H-SMF may perform SM policy association establishment with the selected H-PCF. The H-SMF may forward the information (e.g., the session management policy and the charging information about the HR roaming session) received from the V-SMF to the H-PCF. The H-PCF may establish an SM policy by referring to the corresponding information (e.g., the policy information about the HR roaming session applied in the VPLMN) received from the H-SMF, and may provide the SM policy to the H-SMF.

Operation 14-1: The H-SMF may select an H-CHF by considering the information about the V-CHF received from the V-SMF. When selecting the H-CHF, the H-SMF may consider information indicating that the edge computing service is supported through the session breakout of the HR roaming session and the related charging policy is also applied from the V-SMF. For example, the H-SMF may select an H-CHF capable of verifying the charging policy applied to the session broken out from the HR roaming session. The H-SMF may transmit the charging information about the HR roaming session received from the V-SMF to the H-CHF. The information may include the information obtained from the V-CHF in operation 7-2 and the information about the V-CHF.

Operation 14-2: The H-CHF may provide the charging information about the HR roaming session to the H-SMF. Further, the H-CHF may verify the charging policy or information received via the V-SMF. For example, the H-CHF may identify whether the charging policy or information accords with an agreement between an HPLMN operator and the VPLMN operator or whether charging according with the subscription information stored in the UDM or the UDR is applied. The H-CHF may provide a charging ID generated at home when providing THE charging information about the HR roaming session. The charging ID generated at H-CHF home may be mapped and stored with the charging ID generated in the VPLMN.

Operation 15: The H-SMF may select the H-UPF and establish an N4 session, based on the session management policy and the charging policy provided from the H-PCF and the H-CHF in operation 13 and operation 14-2. In addition, the H-SMF may apply the charging policy for the HR roaming session while providing UPF information within the VPLMN to the H-UPF.

Operation 16: The H-SMF may transmit a response message to the message (e.g., the PDU session establishment request message) received in operation 10 to the V-SMF. The response message may include an edge computing service permission indicator through the breakout of the HR session. Alternatively, the response message may include a modification request indicator for the policy configured in the VPLMN and a parameter value for modification.

Operations 17/18: The V-SMF may receive the success or failure of HR session-related PDU session establishment from the H-SMF, and may provide the V-EASDF with a DNS message processing rule for handling a DNS message transmitted through the HR session. The V-SMF may transmit a configuration request to the V-EASDF so that a message not related to the edge computing service among DNS messages may be transmitted to a DNS server in a home network through HR. The V-SMF may transmit a PDU session establishment result and DNS server address information to the UE through the AMF.

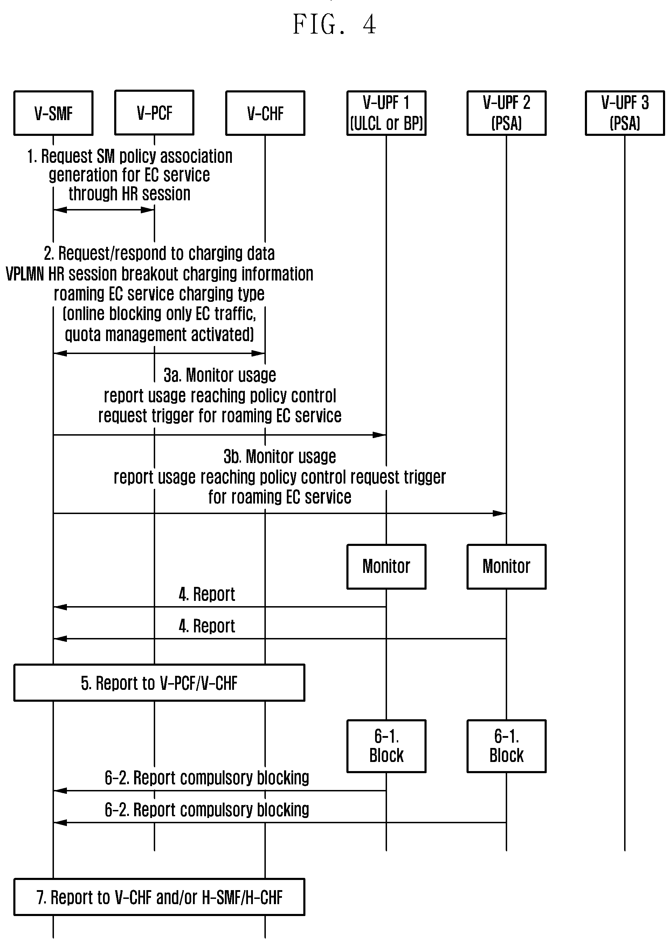

FIG. 4 illustrates an example of a procedure for performing charging-related reporting according to an embodiment of the disclosure.

Operation 1: A V-SMF may perform session management policy association establishment with a V-PCF to obtain session management policy information for supporting an edge computing service for a roaming UE. Operation 1 may correspond to operation 5-1 and operation 5-2 of FIG. 3A. Therefore, a description of operation 5-1 and operation 5-2 of FIG. 3A may also be applied/referenced to operation 1 of FIG. 4, and a redundant description is omitted for convenience.

Operation 2: The V-SMF may request an edge computing service charging application policy or information about the roaming UE from a V-CHF to obtain the same.

Operations 3a/3b: The V-SMF may request a usage monitoring report from a UPF in a roaming session path, based on the policy information obtained through operation 1 and operation 2 as follows.

Operation 3a: When there is an edge computing service usage limit for the roaming UE from the V-PCF or the V-CHF (when performing blocking or quota management is indicated and the threshold of a related usage limit is configured), the V-SMF may indicate that a V-UPF1 serving as a ULCL or BP monitors traffic volume related to the edge computing service transmitted to a V-UPF 2. In addition, the V-SMF may indicate that a traffic usage limit value is provided to the V-UPF1 and the V-UPF1 performs reporting when traffic usage is close to the limit value. For example, the V-SMF may indicate that the V-UPF1 performs reporting while providing a reporting request indicator for a usage report reached event or a usage limit value approach notification request indicator as a target event of a policy control request trigger for the roaming edge computing service to the V-UPF1.

Operation 3b: When there is an edge computing service usage limit for the roaming UE from the V-PCF or the V-CHF (when performing blocking or quota management is indicated and the threshold of a related usage limit is configured), the V-SMF may indicate that a V-UPF2 serving as a PSA for traffic transmitted to an edge data network monitors traffic volume related to the edge computing service. In addition, the V-SMF may indicate that a traffic usage limit value is provided to the V-UPF2 and the V-UPF2 performs reporting when traffic usage is close to the limit value. For example, the V-SMF may indicate that the V-UPF2 performs reporting while providing a reporting request indicator for a usage report reached event or a usage limit value approach notification request indicator as a target event of a policy control request trigger for the roaming edge computing service to the V-UPF2.

When performing operation 3a or operation 3b, if the V-SMF recognizes that charging for the edge computing service for the roaming UE needs to be applied differently from that for a general roaming session, based on the information received from the V-PCF or V-CHF in operation 1 or operation 2, the procedure of operation 3b may be performed mandatorily. In another example, when the V-SMF recognizes that the charging for the edge computing service for the roaming UE needs to be applied the same as that for the general roaming session through the information provided from the V-PCF or V-CHF in operation 1 or operation 2, only operation 3a may be performed. In this case, through operation 3b, the V-UPF 2 may not monitor the traffic usage in a session broken out from an HR roaming session for a charging purpose, and may not report the traffic usage to the V-SMF. Alternatively, monitoring may be performed separately from the charging purpose, but the traffic usage may not be reported to the CHF or PCF for charging.

Operation 4: The V-UPF 1 or the V-UPF 2 may perform monitoring and reporting according to the indication received in operation 3. When receiving the traffic usage limit value and receiving the indication of performing the reporting when the traffic usage is close to the usage limit value in operation 3 (e.g., when receiving the reporting request indicator for the usage report reached event or the usage limit value approach notification request indicator as the target event of the policy control request trigger for the roaming edge computing service from the V-SMF), the V-UPF 1 or the V-UPF 2 may notify the V-SMF that the traffic usage is close to the limit value when the traffic usage is close to the limit value.

For example, when the traffic usage reaches X% (0<X<100, where X may be configured together with the limit value, or may be predefined) of the configured limit value, the traffic usage may be determined to be close to the limit value.

In another example, when the difference between the traffic usage and the limit value is within a specific value, the traffic usage may be determined to be close to the limit value. Here, the specific value may be configured with the limit value, or may be a predefined value.

In still another example, when the traffic usage is the limit value or greater, the V-SMF may be notified that the traffic usage is close to the limit value.

Operation 5: The V-SMF may notify/report the reporting received from the V-UPF (e.g., the V-UPF 1/V-UPF 2) to the V-PCF and/or V-CHF. The V-PCF or V-CHF may recognize the fact that the traffic usage is close to the limit value received from the V-SMF, and may provide new session management policy information or charging policy information for corresponding UE traffic. Alternatively, the V-PCF or V-CHF may give an indication of performing blocking or quota management according to the previously configured policy when the usage reaches the limit value. Alternatively, the V-PCF or V-CHF may give an indication of continuously monitoring the usage instead of performing blocking.

Operations 6-1/6-2: When the V-UPF2 does not receive modified policy information from the V-SMF after the reporting in operation 4, the V-UPF2 may perform blocking according to the previously configured policy. The V-UPF2 may notify the V-SMF that the edge computing service for the roaming UE transmitted through the V-UPF2 has been successfully blocked.

Blocking edge computing service traffic for the roaming UE may be performed by both the V-UPF 1 (UPF performing session breakout) and the V-UPF 2 according to an operator policy. That is, the V-UPF 1 may perform blocking in an uplink and notify the result to the V-SMF, and the V-UPF2 may perform blocking in a downlink and notify the result to the V-SMF.

Operation 7: The V-SMF may transmit the result of performing the blocking received from the V-UPF to the V-PCF and/or the V-CHF.

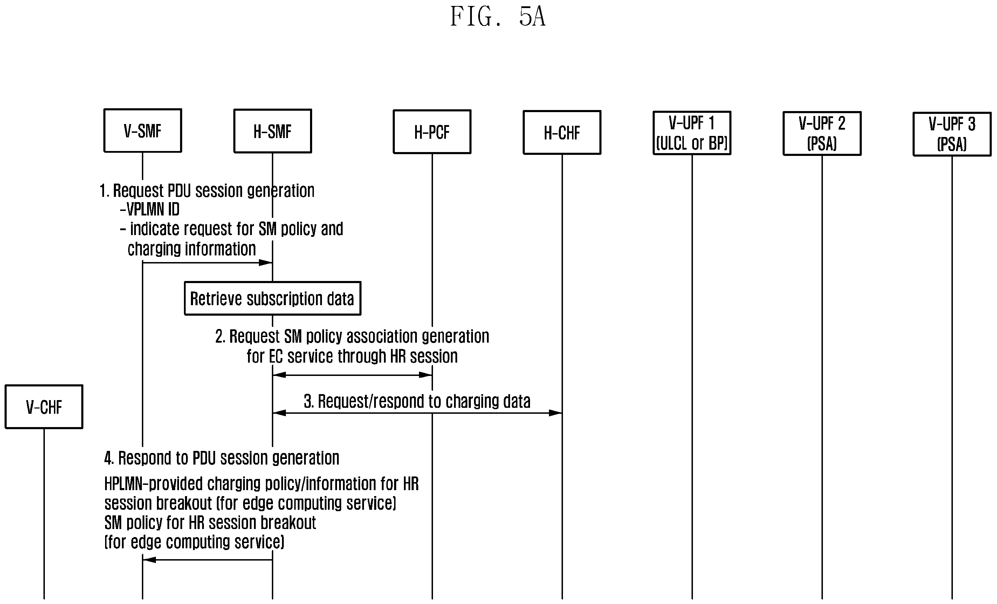

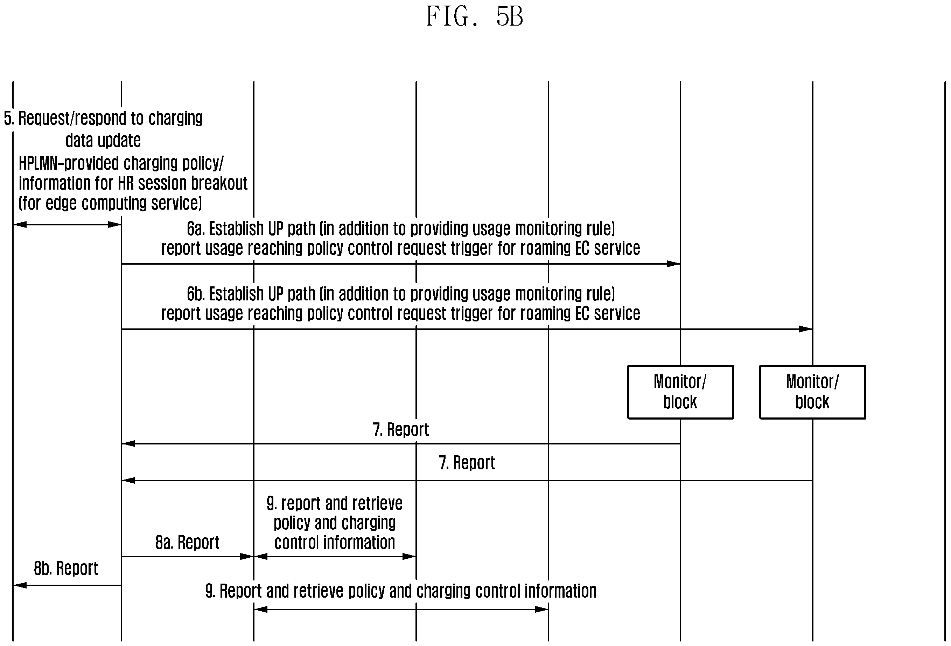

FIG. 5A and FIG. 5B illustrate an example of a procedure for applying a charging policy and performing charging-related reporting according to a policy of an HPLMN according to an embodiment of the disclosure.

Referring to FIG. 5A and FIG. 5B, a V-SMF may obtain charging-related information about an edge computing session for a roaming UE from an H-SMF, and may perform charging-related reporting to the H-SMF.

Operation 1: When receiving a PDU session establishment request from an AMF and recognizing that the request is an HR roaming session establishment request, the V-SMF may transmit a PDU session establishment request message to the H-SMF. The request message may include the identifier of a VPLMN to which the V-SMF belongs, a session management policy and charging-related information request indicator, and/or roaming charging information (e.g., the address and identifier of a V-CHF and a VPLMN-generated charging ID) within the VPLMN.

Operation 2: The H-SMF may transmit an SM policy association establishment request to an H-PCF, and may receive a response thereto. The H-SMF may identify information indicating whether the session breakout of an HR roaming session is allowed, which is included in subscriber information about the roaming UE, from a UDM. When the session breakout of the HR roaming session is allowed, the H-SMF may obtain a session breakout-related policy on the HR roaming session from the H-PCF.

There may be various methods for identifying whether the session breakout of the HR roaming session is allowed for the roaming UE and for providing a session management policy and related charging information to the H-SMF. For example, the H-SMF may identify whether the session breakout of the HR roaming session is allowed in the subscriber information stored in the UDM or identify and determine whether an edge computing service for the roaming UE is allowed in the subscriber information stored in the UDM, and may request a session breakout-related policy and charging information about the HR roaming session from the H-PCF. In another example, when requesting a session management policy from the H-PCF, the H-SMF may provide a session of the roaming UE being HR and the identifier (e.g., the VPLMN ID) of a PLMN on which the UE is currently roaming, and the H-PCF may identify the subscriber information stored in the UDR and provide a related policy to the H-SMF. Information that the H-SMF obtains from the H-PCF through this process may correspond to the information obtained in operation 5-1 or operation 5-2 of FIG. 3A. Therefore, the description of operation 5-1 or operation 5-2 of FIG. 3A may also be applied/referenced to operation 2 of FIG. 5A, and a redundant description is omitted for convenience.

Operation 3: When the session breakout of the HR roaming session is allowed in operation 2, the H-SMF may obtain a charging application policy or information for the edge computing service for the roaming UE, which is applicable in the VPLMN, from the H-CHF (e.g., the H-SMF may provide the VPLMN ID and an HR roaming session breakout permission indicator to the H-CHF, and may obtain from the H-CHF charging information that needs to be applied when the HR roaming session is broken out in the VPLMN). The charging information may be provided in the form of a roaming charging profile, and may include a charging ID assigned by the H-CHF and at least one of the following elements:
- Charging application method type;
   ■ Type 1 of uniform application to HR roaming session: The same charging policy or method is applied to traffic transmitted to the UPF of the HPLMN in the HR roaming session and traffic forwarded to the V-UPF through the HR roaming session breakout and transmitted to the edge data network (data network in which the edge computing service provided by a VPLMN operator is hosted) connected to the VPLMN.
   ■ Type 2 of applying differential edge computing service charging through the HR roaming session breakout: Different charging policies or methods are applied to the traffic transmitted to the UPF of the HPLMN in the HR roaming session and the session broken out from the HR roaming session (traffic session transmitted to the edge data network of the VPLMN through the V-UPF).
- Charging type; or
   ■ The charging type may be either online charging or offline charging.
   ■ When the charging application method is type 2, a charging type for each of the session transmitted to the UPF of the HPLMN in the HR roaming session and the session broken out from the HR roaming session may be included the charging information.
- Charging model;
   ■ The charging model may be one of data volume-based, usage time-based, usage and time-based, event-based, and non-charging models. Measurement for charging may be performed based on the charging model.
   ■ When the charging application method is type 2, a charging model for each of the session transmitted to the UPF of the HPLMN in the HR roaming session and the session broken out from the HR roaming session may be included in the charging information.

Operation 4: The H-SMF may transmit, to the V-SMF, the session management policy (e.g., an SM policy for the breakout of the HR session for the edge computing service) obtained from the H-PCF and the H-CHF in the previous operation, identifier and address information about the H-PCF, the charging information (e.g., HPLMN-provided charging policy/information for the breakout of the HR roaming session), identifier and address information about the H-CHF, and/or the charging ID assigned by the H-CHF. For example, these pieces of information may be included in a PDU session establishment response message and transmitted to the V-SMF.

Operation 5: The V-SMF may provide the HPLMN-provided charging information received from the H-SMF to the V-CHF. The V-CHF may store the HPLMN-provided charging information, and may manage the HPLMN-provided charging information by mapping the same to the charging information generated by the VPLMN. The V-CHF may transmit success in configuring the HPLMN-provided charging information to the V-SMF.

Operation 6a: When there is an edge computing service usage limit for the roaming UE in HR roaming session management and charging information (session management and charging information generated in the H-PCF or H-CHF) received through the H-SMF (when performing blocking or quota management is indicated and the threshold of a related usage limit is configured), the V-SMF may indicate that a V-UPF1 serving as a ULCL or BP monitors traffic volume related to the edge computing service transmitted to a V-UPF 2. In addition, the V-SMF may indicate that a traffic usage limit value is provided to the V-UPF1 and the V-UPF1 performs reporting when traffic usage is close to the limit value. For example, the V-SMF may indicate that the V-UPF1 performs reporting while providing a reporting request indicator for a usage report reached event or a usage limit value approach notification request indicator as a target event of a policy control request trigger for the roaming edge computing service to the V-UPF1.

Operation 6b: When there is an edge computing service usage limit for the roaming UE from the V-PCF or the V-CHF (when performing blocking or quota management is indicated and the threshold of a related usage limit is configured), the V-SMF may indicate that a V-UPF2 serving as a PSA for traffic transmitted to an edge data network monitors traffic volume related to the edge computing service. In addition, the V-SMF may indicate that a traffic usage limit value is provided to the V-UPF2 and the V-UPF2 performs reporting when traffic usage is close to the limit value. For example, the V-SMF may indicate that the V-UPF2 performs reporting while providing a reporting request indicator for a usage report reached event or a usage limit value approach notification request indicator as a target event of a policy control request trigger for the roaming edge computing service to the V-UPF2.

For example, when performing operation 6a or operation 6b, if the V-SMF recognizes that charging for the edge computing service for the roaming UE needs to be applied differently from that for a general roaming session, based on the information received from the H-SMF, the procedure of operation 6b may be performed mandatorily. In another example, when the V-SMF recognizes that the charging for the edge computing service for the roaming UE needs to be applied the same as that for the general roaming session through the information provided from the H-SMF in the previous operation, only operation 6a may be performed. In this case, through operation 6b, the V-UPF 2 may not monitor the traffic usage in a session broken out from an HR roaming session for a charging purpose, and may not report the traffic usage to the V-SMF. Alternatively, monitoring may be performed separately from the charging purpose, but the traffic usage may not be reported to the H-SMF or V-CHF through the V-SMF for charging.

Operation 7: The V-UPF 1 or the V-UPF 2 may perform monitoring and reporting according to the indication received in operation 6a/6b. When receiving the traffic usage limit value and receiving the indication of performing the reporting when the traffic usage is close to the usage limit value in operation 6a/6b (e.g., when receiving the reporting request indicator for the usage report reached event or the usage limit value approach notification request indicator as the target event of the policy control request trigger for the roaming edge computing service from the V-SMF), the V-UPF 1 or the V-UPF 2 may notify the V-SMF that the traffic usage is close to the limit value when the traffic usage is close to the limit value.

For example, when the traffic usage reaches X% (0<X<100, where X may be configured together with the limit value, or may be predefined) of the configured limit value, the traffic usage may be determined to be close to the limit value.

In another example, when the difference between the traffic usage and the limit value is within a specific value, the traffic usage may be determined to be close to the limit value. Here, the specific value may be configured with the limit value, or may be a predefined value.

In still another example, when the traffic usage is the limit value or greater, the V-SMF may be notified that the traffic usage is close to the limit value.

Operation 8a/8b: The V-SMF may notify the V-CHF and H-SMF of the report received from the V-UPF (e.g., the V-UPF 1/V-UPF 2).

Operation 9: The H-SMF may recognize that the traffic usage is close to the limit value, based on the report received from the V-SMF, and may forward the report to the H-PCF and H-CHF. The H-PCF and H-CHF may provide new session management policy information or charging policy information for corresponding UE traffic. Alternatively, the H-PCF and H-CHF may give an indication of performing blocking or quota management according to the previously configured policy when the traffic usage reaches the limit value. Alternatively, the H-PCF and H-CHF may give an indication of continuously monitoring the usage instead of performing blocking. The session management policy information or charging information including this indication information may be provided to the H-SMF, and the H-SMF may forward the same to the V-SMF. Subsequently, when the V-UPF2 does not receive modified policy information from the V-SMF after the reporting in operation 7, the V-UPF2 may perform blocking according to the previously configured policy. The V-UPF2 may notify the V-SMF that the edge computing service for the roaming UE transmitted through the V-UPF2 has been successfully blocked (blocking result information). When the blocking result is reported to the V-SMF, the V-SMF may forward this report to the H-SMF, and the H-SMF may forward the report to the H-PCF and the H-CHF.

Blocking edge computing service traffic for the roaming UE may be performed by both the V-UPF 1 (UPF performing session breakout) and the V-UPF 2 according to an operator policy. That is, the V-UPF 1 may perform blocking in an uplink and notify the result to the V-SMF, and the V-UPF2 may perform blocking in a downlink and notify the result to the V-SMF. The results of performing the blocking respectively in the uplink and downlink may be notified to the H-SMF through the V-SMF, and may be notified to the H-PCF and the H-CHF.

Hereinafter, examples of main operations of each NF for applying charging for an edge computing service through the session breakout of an HR roaming session according to the foregoing proposed methods and/or embodiments are described.

A V-SMF may perform at least one of the following operations, based on identifying that the session breakout of an HR session is allowed:
- Selecting a V-CHF (e.g., selecting a CHF capable of providing a charging profile for an EC roaming service);
- Transmitting information indicating that the session breakout of the HR session is allowed to the V-CHF (e.g., indicating HR session breakout);
- Receiving related VPLMN HR session breakout charging information (e.g., roaming charging profile including a V-session breakout indication) from the V-CHF;
- Sharing the VPLMN HR session breakout charging information received from the V-CHF with an H-SMF;
- Configuring a V-ULCL-UPF and a V-PSA-UPF;
- Reporting to a PCF that the usage is close to a corresponding threshold when a usage report trigger is configured and volume and time thresholds are configured separately for traffic transmitted along an in-VPLMN session breakout path of the HR session;
- Obtaining session management policy and charging information related to the session breakout of the VPLMN HR roaming session from a V-PCF or the H-SMF; and
- Receiving the start of V-session breakout for an application and the end of triggering V-session breakout detection for the application from the PCF, and reporting related information to the PCF when specific application traffic starts to be transmitted through the in-VPLMN session breakout path of the HR session in the case where the detection is performed.

After identifying whether the session breakout of the HR session is allowed and applicable, the H-SMF may perform at least one of the following operations:
- Transmitting information indicating the session breakout of the HR session is allowed to the H-CHF (e.g., indicating HR session breakout)
- Transmitting the VPLMN HR session breakout charging information received from the V-SMF to the H-CHF; or
- Receiving related charging information or a roaming charging profile from the H-CHF.

A CHF may register in an NRF whether the CHF is capable of providing a charging profile related to an EC roaming service or whether the CHF is capable of providing charging information related to the session breakout of an HR roaming session.

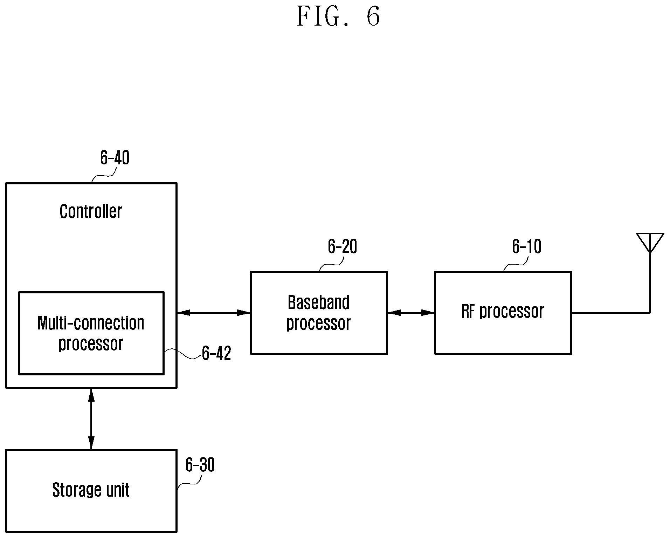

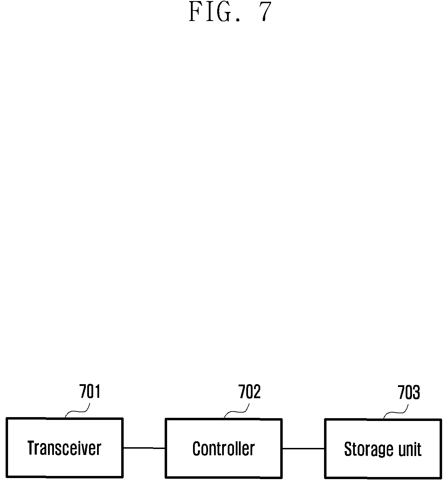

The methods and/or embodiments proposed in the disclosure may be performed by a UE of FIG. 6 and a network entity of FIG. 7.

FIG. 6 is a block diagram illustrating the internal structure of a UE according to an embodiment of the disclosure.

Referring to FIG. 6, the UE may include a radio-frequency (RF) processor 6-10, a baseband processor 6-20, a storage unit 6-30, and a controller 6-40. The UE is not limited to the foregoing example, and may include fewer or more components than those illustrated in FIG. 6.

The RF processor 6-10 may perform a function for transmitting or receiving a signal through a wireless channel, such as band conversion and amplification of a signal. That is, the RF processor 6-10 may upconvert a baseband signal, provided from the baseband processor 6-20, into an RF band signal to transmit the RF band signal through an antenna, and may downconvert an RF band signal, received through the antenna, into a baseband signal. For example, the RF processor 6-10 may include a transmission filter, a reception filter, an amplifier, a mixer, an oscillator, a digital-to-analog converter (DAC), and an analog-to-digital converter (ADC), but is not limited thereto. Although FIG. 6 shows only one antenna, the UE may include a plurality of antennas. In addition, the RF processor 6-10 may include a plurality of RF chains. Further, the RF processor 6-10 may perform beamforming. For beamforming, the RF processor 6-10 may adjust the phase and strength of each of signals transmitted and received through a plurality of antennas or antenna elements. The RF processor 6-10 may perform MIMO, and may receive a plurality of layers when performing multipleinput and multiple-output (MIMO).

The baseband processor 6-20 performs a function of converting a baseband signal and a bit stream according to the physical-layer specification of a system. For example, in data transmission, the baseband processor 6-20 encodes and modulates a transmission bit stream, thereby generating complex symbols. In data reception, the baseband processor 6-20 may demodulate and decode a baseband signal, provided from the RF processor 6-10, thereby reconstructing a reception bit stream. For example, according to OFDM, in data transmission, the baseband processor 6-20 generates complex symbols by encoding and modulating a transmission bit stream, maps the complex symbols to subcarriers, and constructs OFDM symbols through an inverse fast Fourier transform (IFFT) and cyclic prefix (CP) insertion. In data reception, the baseband processor 6-20 may divide a baseband signal, provided from the RF processor 6-10, into OFDM symbols, may reconstruct signals mapped to subcarriers through a fast Fourier transform (FFT), and may reconstruct a reception bit stream through demodulation and decoding.

As described above, the baseband processor 6-20 and the RF processor 6-10 transmit and receive signals. The baseband processor 6-20 and the RF processor 6-10 may be referred to as a transmitter, a receiver, a transceiver, or a communication unit. At least one of the baseband processor 6-20 and the RF processor 6-10 may include a plurality of communication modules to support a plurality of different radio access technologies. Further, at least one of the baseband processor 6-20 and the RF processor 6-10 may include different communication modules to process signals in different frequency bands. For example, the different radio access technologies may include a wireless LAN (e.g., IEEE 802.11), a cellular network (e.g., LTE), and the like. In addition, the different frequency bands may include a super high frequency (SHF) band (e.g., 2. NRHz) and a millimeter wave band (e.g., 60 GHz). The UE may transmit or receive a signal to or from a base station by using the baseband processor 6-20 and the RF processor 6-10, and the signal may include control information and data.

The storage unit 6-30 stores data, such as a default program, an application, and configuration information for operating the UE. In particular, the storage unit 6-30 may store information about a second access node performing wireless communication using a second radio access technology. The storage unit 6-30 provides stored data upon request from the controller 6-40. The storage unit 6-30 may be configured as a storage medium, such as a ROM, a RAM, a hard disk, a CD-ROM, and a DVD, or a combination of storage media. The storage unit 6-30 may also be configured as a plurality of memories.

The controller 6-40 controls overall operations of the UE. For example, the controller 6-40 transmits and receives signals through the baseband processor 6-20 and the RF processor 6-10. Further, the controller 6-40 records and reads data in the storage unit 6-40. The controller 6-40 may control the operation of the UE so that the UE may perform the foregoing embodiments and proposed methods. To this end, the controller 6-40 may include at least one processor. For example, the controller 6-40 may include a communication processor (CP) to perform control for communication and an application processor (AP) to control an upper layer, such as an application. At least one component in the UE may be configured as a single chip.

FIG. 7 illustrates the structure of a network entity that performs a network function according to an embodiment of the disclosure. For example, the network entity of FIG. 7 may be a network node. For example, the network entity of FIG. 7 may be one of an NWDAF, an AMF, an SMF, a UPF, an NSSF, an AF, an NEF, a CHF, a PCF, a UDM, or an OAM described with reference to the embodiments of the disclosure.

Referring to FIG. 7, the network entity that performs the network function may include a transceiver 701, a controller 702, and a storage unit 703. In the disclosure, the controller may be defined as a circuit, an application-specific integrated circuit, or at least one processor.

The transceiver 701 may transmit and receive signals to and from another network entity. The transceiver 701 may transmit and receive signals or messages to and from, for example, an AMF, which is a network entity managing access and mobility for an access network of a UE.

The controller 702 may control the overall operation of the network entity that performs the network function according to the embodiments proposed in the disclosure. For example, the controller 702 may control signal flow between blocks to perform the operations according to the foregoing flowcharts.

For example, the controller may be configured to identify that the session breakout of a home routed PDU session for roaming is allowed, obtain charging information to be applied to a first PDU session broken out for an edge computing service from the home routed PDU session from an entity that performs a charging function of an HPLMN, and transmit a message including the charging information to an entity that performs a session management function of a VPLMN.

In another example, the controller may be configured to receive a message including charging information from an entity that performs a session management function of an HPLMN, and transmit the charging information to an entity that performs a charging function of a VPLMN.

The storage unit 703 may store at least one of information transmitted and received through the transceiver 701 and information generated through the controller 702.

In the drawings in which methods of the disclosure are described, the order of the description does not always correspond to the order in which steps are performed, and the order relationship between the steps may be changed or the steps may be performed in parallel. Alternatively, in the drawings in which methods of the disclosure are described, some elements may be omitted and only some elements may be included therein without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, all embodiment of the disclosure may be partially combined with each other to operate a base station and a terminal.

## Claims

1. A method performed by a first entity that performs a session management function of a home public land mobile network (HPLMN) in a wireless communication system, the method comprising:
identifying that session breakout of a home routed protocol data unit (PDU) session for roaming is allowed;
obtaining charging information to be applied to a first session broken out in a visited public land mobile network (VPLMN) for an edge computing service among the home-routed PDU session from a second entity that performs a charging function of the HPLMN; and
transmitting a message comprising the charging information to a third entity that performs a session management function of the VPLMN.

2. The method of claim 1, wherein the charging information comprises information indicating whether the same charging policy is applied to a second session transmitted to the HPLMN of the home-routed session and the first session.

3. The method of claim 2, wherein the charging information further comprises information on a charging type and information on a charging model, and
wherein the information on the charging type and the information on the charging model are configured for each of the first session and the second session in case that different charging policies are applied to the first session and the second session.

4. The method of claim 1, further comprising:
receiving, from the third entity, information related to traffic usage in a fourth entity that performs a user plane function of the VPLMN;
transmitting the information to the second entity; and
receiving updated charging information from the second entity, based on the information.

5. The method of claim 1, further comprising:
transmitting a request message for requesting session management policy association establishment to a fourth entity that performs a policy control function of the HPLMN; and
receiving a response message to the request message from the fourth entity,
wherein the response message comprises policy information associated with the session breakout, and
wherein the policy information comprises a data network access identifier associated with the first session.

6. The method of claim 5, wherein the message further comprises the policy information.

7. A method performed by a first entity that performs a session management function of a visited public land mobile network (VPLMN) in a wireless communication system, the method comprising:
receiving a message comprising charging information from a second entity that performs a session management function of a home public land mobile network (HPLMN); and
transmitting the charging information to a third entity that performs a charging function of the VPLMN,
wherein the charging information is applied to a first session broken out in the VPLMN for an edge computing service among a home routed protocol data unit (PDU) session in case that session breakout of the home-routed PDU session for roaming is allowed.

8. The method of claim 7, wherein the charging information comprises information indicating whether the same charging policy is applied to a second session transmitted to the HPLMN among the home-routed PDU session and the first session.

9. The method of claim 8, wherein the message further comprises policy information associated with the session breakout,
wherein the policy information comprises a data network access identifier associated with the first session,
wherein the charging information further comprises information about a charging type and information about a charging model, and
wherein the information about the charging type and the information about the charging model are configured for each of the first session and the second session in case that different charging policies are applied to the first session and the second session.

10. The method of claim 7, further comprising:
transmitting, to the second entity, information related to traffic usage in a fourth entity that performs a user plane function of the VPLMN.

11. A first entity for performing a session management function of a home public land mobile network (HPLMN) in a wireless communication system, the first entity comprising:
a transceiver;
and a controller connected to the transceiver,
wherein the controller is configured to:
identify that session breakout of a home routed protocol data unit (PDU) session for roaming is allowed;
obtain charging information to be applied to a first session broken out in a visited public land mobile network (VPLMN) for an edge computing service among the home-routed PDU session from a second entity that performs a charging function of the HPLMN; and
transmit a message comprising the charging information to a third entity that performs a session management function of the VPLMN.

12. The first entity of claim 11, wherein the charging information comprises information indicating whether the same charging policy is applied to a second session transmitted to the HPLMN of the home-routed session and the first session, information on a charging type, and information on a charging model, and
wherein the information on the charging type and the information on the charging model are configured for each of the first session and the second session in case that different charging policies are applied to the first session and the second session.

13. The first entity of claim 11, wherein the controller is further configured to:
receive, from the third entity, information related to traffic usage in a fourth entity that performs a user plane function of the VPLMN;
transmit the information to the second entity; and
receive updated charging information from the second entity, based on the information.

14. The first entity of claim 11, wherein the controller is further configured to:
transmit a request message for requesting session management policy association establishment to a fourth entity that performs a policy control function of the HPLMN; and
receive a response message to the request message from the fourth entity,
wherein the response message comprises policy information associated with the session breakout, and
wherein the policy information comprises a data network access identifier associated with the first session.

15. A first entity for performing a session management function of a visited public land mobile network (VPLMN) in a wireless communication system, the first entity comprising:
a transceiver; and
a controller connected to the transceiver,
wherein the controller is configured to:
receive a message comprising charging information from a second entity that performs a session management function of a home public land mobile network (HPLMN); and
transmit the charging information to a third entity that performs a charging function of the VPLMN, and
wherein the charging information is applied to a first session broken out in the VPLMN for an edge computing service among a home routed protocol data unit (PDU) session in case that session breakout of the home-routed PDU session for roaming is allowed.
